# EUROPEAN PATENT SPECIFICATION

(11) **EP 4 554 869 B1**
(45) Date of publication and mention of the grant of the patent: **12.08.2026**
(21) Application number: 23735781.9
(22) Date of filing: 29.06.2023
(51) Int. Cl.: B60P 7/08, B65D 19/38, B65D 71/00, B66D 1/00

(54) **STRAP TENSIONING ASSEMBLY AND RIGID COVER COMPRISING SUCH STRAP TENSIONING ASSEMBLY**
RIEMENSPANNVORRICHTUNG UND STARRER DECKEL MIT EINER SOLCHEN RIEMENSPANNVORRICHTUNG
ENSEMBLE DE TENSION DE SANGLE ET COUVERCLE RIGIDE COMPRENANT UN TEL ENSEMBLE DE TENSION DE SANGLE

(30) Priority: 11.07.2022 EP 22184139
(43) Date of publication of application: 21.05.2025
(73) Proprietor: Smart Flow Europe SA, 7700 Mouscron (BE)
(72) Inventor: DELVIGNE, Christian, 59700 Marcq-en-Baroeul (FR)
(74) Representative: De Clercq & Partners
(86) International application number: PCT/EP2023/067844
(87) International publication number: WO 2024/012889

(56) References cited:
- CN-A- 109 733 268
- GB-A- 2 402 380
- US-A1- 2004 101 380
- US-A1- 2010 166 521

## Description

### FIELD OF THE INVENTION

The present invention relates to the technical field of packaging solutions. More in particular, the present invention relates to reusable packaging solutions, to be used for palletized loads comprising a strap for securing the load to the pallet. The invention therefore provides a strap tensioning assembly, which may be incorporated in the packaging solution, for tensioning the strap.

### BACKGROUND OF THE INVENTION

During the transport of goods, straps are often used to secure the goods and prevent movement and damage of the goods. To make it easy for an operator to secure the good for transport, it is advantage that the straps come with a strap tensioning assembly. Such assemblies exist; however, these have many disadvantages. As these strap tensioning systems are often used in industrial transport, these assemblies may be subjected to heavy duty handling. Most of the known strap tensioning assemblies are complex and comprise many different parts.

Such a strap tensioning assembly is known from CN 109 733 268, where a car carrier binder comprises a mounting plate and a propping plate which is used for propping against a wheel. A motor is able to drive a rod via a transmission structure having gears. When turning the rod, an engaging claw having a latch will engage with the helical worm and will thus pull the rod from the right hand side position to the left hand side position. Once the rod is in its left position, the worm screw will be in full contact with the teeth on the worm wheel do drive the reel to tension the strap (engagement state). At this position, the engaging claw is beyond the worm and will perform a blockage function when the motor is disengaged. The worm will not be able to move back to the right due to the fact that the claw is blocking the worm and thus the rod. When the assembly needs to be loosened again, the motor is being reversed, thus rotating the rod in the opposite direction. This again will allow the claw to be engaged with the worm screw and will pull the rod to the right hand side position, thus disengaging the worm screw from the teeth. Once the motor is stopped again, the strap will no longer be under tension and can be pulled further from the reel thus allowing the removal from the strap of the wheel. Although useful, the car carrier binder is driven by a motor which is not always convenient to use.

Hence, there is a demand for strap tensioning assemblies comprising fewer parts, making these strap tensioning assemblies robust, easier to fix, less prone to malfunction and/or lighter. There is a further demand for assemblies wherein the strap cannot easily entangle inside the strap tensioning assembly.

Preferably, the strap tensioning assemblies are easy to handle, and preferably allow for fast tensioning procedure.

### SUMMARY OF THE INVENTION

It has now surprisingly been found that some or all of the above demands and objectives can be attained either individually or in any combination by strap tensioning assemblies, wherein tension in the strap can be provided by rotating a retracting spool within such assemblies, and wherein the tension can be maintained by holding the retracting spool in position once the tension has been provided in the strap. The inventors have found that this can be established by rotationally fixing a ring gear to the retracting spool, which can mesh with a worn gear, and wherein the worm screw can be engaged and disengaged with the ring gear, by selecting mechanism.

In particular, the present invention relates to a strap tensioning assembly (1), comprising:
- a strap (2);
- a retracting spool (3), formed by a barrel (4) and at least a first flange (5), preferably wherein the retracting spool (3) is configured for by default retracting the strap (2), thereby winding the strap (2) around the barrel (4) of the retracting spool (3);
- a ring gear (6), comprising gear teeth (7) preferably arranged in a circle, wherein the ring gear (6) is attached to or integrated in the first flange (5);
- a worm screw (8), engageable and disengageable with the ring gear (6);
- a drive formation (9), for rotating the worm screw (8); and,
- a selecting mechanism (10), for engaging and disengaging the worm screw (8) with the ring gear (6),
wherein the selecting mechanism (10) comprises a first axis (12), whereon the worm screw (8) is rotationally fixed, and wherein the first axis (12) is configured for movement and stable positioning between a first position and a second position for engaging and disengaging the worm screw (8) with the ring gear (6).

In some embodiments, the ring gear (6) is concentrically arranged around the barrel (4).

In some embodiments, the retracting spool (3) is spring loaded, preferably wherein the retracting spool comprises a spiral spring (22) or a torsion spring.

In some embodiments, the gear teeth (7) of the ring gear (6) are arranged on one side, preferably the first side of the first flange (5).

In some embodiments, each gear tooth (7) of the ring gear (6) is formed from a body, preferably projecting downwards from the one side or projecting inwards from the one side, and disposed in a radial direction with respect to an axis of rotation of the retracting spool

In some embodiments, the ring gear (6) is a worm wheel, a bevel gear or a crown gear.

In some embodiments, the drive formation (9) comprises a handle, a knob or crank (11), preferably a manually operatable handle, knob or crank (11).

In some embodiments, the first axis (12) is moveable arranged in the strap tensioning assembly (1), between at least a first position, and a second position.

In some embodiments, in the first position, the worm screw (8) engages with the gear teeth (7) of the ring gear (6), and wherein in the second position the worm screw (8) disengages with the gear teeth (7) of the ring gear (6).

In some embodiments, the selecting mechanism (10) comprise locking mechanism, for locking the worm screw (8) in the first position.

In some embodiments, the locking mechanism comprise a rotatable cam (15) and a slot (16) for engaging the cam (15).

In some embodiments, the drive formation (9) comprises a gear transmission, preferably a gear reduction between the handle, knob or crank (11) and the worm screw (8).

The present invention relates to a rigid cover (15) comprising one or more the strap tensioning assemblies (1) according to an embodiment described herein.

The present invention relates to a pallet comprising one or more the strap tensioning assemblies (1) according to an embodiment described herein.

The present invention relates to a box, comprising a rigid cover according to an embodiment described herein.

The independent and dependent claims set out particular and preferred features of the invention. Features from the dependent claims may be combined with features of the independent or other dependent claims as appropriate.

The present invention will now be further described. In the following passages, different aspects of the invention are defined in more detail. Each aspect so defined may be combined with any other aspect or aspects unless clearly indicated to the contrary. In particular, any feature or statement indicated as being preferred or advantageous may be combined with any other features or statements indicated as being preferred or advantageous.

### BRIEF DESCRIPTION OF THE FIGURES

**Figure 1** depict a strap tensioning assembly according to an embodiment of the invention with the worm screw in the engaged position. Figures 1a is perspective view of the strap tensioning assembly. Figures 1b is a side view of the strap tensioning assembly and Figures 1c is a cross section of the strap tensioning assembly.
**Figure 2** depict a strap tensioning assembly according to an embodiment of the invention with the worm screw in the disengaged position. Figures 2a is perspective view of the strap tensioning assembly. Figures 2b is a side view of the strap tensioning assembly and Figures 2c is a cross section of the strap tensioning assembly.
**Figure 3** shows an exploded view of the moving parts of a selecting mechanism that may be used in a strap tensioning assembly according to an embodiment of the invention.
**Figure 4** shows a partially exploded view of a selecting mechanism that may be used in a strap tensioning assembly according to an embodiment of the invention.
**Figure 5a** shows a perspective view of a rigid cover comprising two strap tensioning assemblies according to an embodiment of the invention. **Figure 5b** shows a side view of the rigid cover depicted in Figure 5a. **Figure 5c** shows a cross section along section BB' as indicated in figure 5b.
**Figure 6a** **and** **Figure 6b** depict a strap tensioning assembly according to an embodiment of the invention, with the drive formation in the retracted position.
**Figure 7a****,** **Figure 7b****,** **Figure7c** **and** **Figure 7d****,** depict the same embodiment as shown in Figure 6A and B, however with the drive formation in the extended position.
**Figure 8** depict the same embodiment as shown in Figure 6a and 6b and in Figure 7a, 7b, 7c and 7d, however the drive formation is shown at the moment slip occurs in slip coupling between the first coupling half (31) and the second coupling half (32) in the torque limiter (30).
**Figure 9** depicts an exploded view of the drive formation depicted in in Figure 6a and 6b, Figure 7a, 7b,7c and 7d, and Figure 8. As shown in the figure, the handle is made from two halves (11a and 11b).

### DETAILED DESCRIPTION OF THE INVENTION

The invention is a strap tensioning assembly, a rigid cover, a pallet, and a box, according to the attached claims. J

The present invention is based on the finding that a worm screw, which can engage with a ring gear attached to or integrated in a retracting spool, can be used to provide tension in a strap, which may be wound around the retracting spool and that the worm screw can lock the retracting spool to maintain the tension in the strap. The invention has the advantage that a strap tensioning system can be provided with a minimal number of parts. This may result in a very robust strap tensioning assembly, which may be suitable for heavy duty use. The strap tensioning system according to the invention may also be easily assembled, as there as only few parts required in the strap tensioning system. Even when the strap tensioning system according to the invention would be broken, it can be easy fixed as only few parts are involved. A further advantage of the invention is that the strap tensioning system according to the invention can be kept compact, as only few parts are involved. Such a compact strap tensioning system may have the advantage that is can be kept light weight and/or can be build in a small or thin packaging solution.

As used herein "the engaged position of the worm screw" refers to a position of the worm screw relative to the ring gear, wherein the gear teeth of the ring gear may mesh with the worm screw. In other words, in the engaged position, rotation of the worm screw will result in rotation of the ring gear.

As used herein "the disengaged position of the worm screw" to a position of the worm screw relative to the ring gear, wherein the gear teeth of the ring gear do not mesh with the worm screw. In other words, in the engaged position, rotation of the worm screw will not result in rotation of the ring gear. Preferably, in the disengaged position, the ring gear is unhindered in rotation by the worm screw. Preferably, in the disengaged position the retracting spool will retract the strap, when no external force is being applied on the strap. Preferably, in the disengaged position the retracting spool will retract the strap under the influence of a spring in the retracting spool.

As used herein, the term "worm screw" refers to a screw like gear which may mesh with another gear, for example a worm wheel, to form a worm drive. An often-used synonym is the term "worm".

The invention provides in a strap tensioning assembly, comprising:
- a strap;
- a retracting spool, formed by a barrel and at least a first flange, preferably wherein the retracting spool is configured for by default retracting the strap, thereby winding the strap around the barrel of the retracting spool;
- a ring gear, comprising gear teeth, preferably arranged in a circle; wherein the ring gear is attached to or integrated in the first flange;
- a worm screw, engageable and disengageable with the ring gear;
- a drive formation, for rotating the worm screw; and,
- a selecting mechanism, for engaging and disengaging the worm screw with the ring gear,
wherein the selecting mechanism comprises a first axis, whereon the worm screw is rotationally fixed, and wherein the first axis is configured for movement and stable positioning between a first position and a second position for engaging and disengaging the worm screw with the ring gear.

The strap tensioning assembly of the invention has the advantage that when the worm screw engages the with the ring gear, the strap tensioning assembly is self-locking, meaning that the retracting spool is locked in position and that the strap can neither unwind or upwind. This is caused by the ring gear being attached or integrated with the flange of the retracting spool. However, manipulation of the drive formation, may result in rotation of the worm screw in the engaged position, which will rotate the ring gear, and eventually will rotate the retracting spool, winding up the strap. This way, tension may be increased on the strap. Leaving the worm screw in the engaged position after the tension in the strap has been provided, results in a retention of the tension in the strap. The tension in the strap may be released by disengaging the worm screw from the ring gear, by the selecting mechanism. This will allow the retracting spool to rotate thereby releasing the tension in the strap.

In some embodiments, the lead angle of the worm screw is at least 1.0° to at most 15.0°, preferably at least 2.0° to at most 12.0°, preferably at least 3.0° to at most 10.0°, preferably at least 4.0° to at most 9.5°, preferably at least 5.0° to at most 9.0°, preferably at least 6.0° to at most 8.5°, preferably at least 7.0° to at most 8.0°, preferably at least 7.5 to at most 8.0°. Such lead angles make the worm screw and ring gear arrangement self-locking.

In some embodiments, the lead angle of the worm screw is at most 15.0°, preferably at most 12.0°, preferably at most 10.0°, preferably at most 9.5°, preferably at most 9.0°, preferably at most 8.5°, preferably at most 8.0°, preferably at most 7.5°.

In some embodiments, the lead angle of the worm screw is at least 1.0°, preferably at least 2.0°, preferably at least 3.0°, preferably at least 4.0°, preferably at least 5.0°, preferably at least 6.0°, preferably at least 7.0°, preferably at least 7.5.

In some embodiments, the worm screw and ring gear are self-locking.

More particular, the invention provides in a strap tensioning assembly, comprising:
- a strap;
- a retracting spool, formed by a barrel and at least a first flange, preferably configured for by default retracting the strap, thereby winding the strap around the barrel of the retracting spool;
- a ring gear, comprising gear teeth, preferably arranged in a circle; wherein the ring gear is attached to or integrated in the first flange, and wherein the ring gear is concentrically arranged around the barrel; preferably wherein the ring gear is a bevel gear, more preferably a crown gear;
- a worm screw, engageable and disengageable with the ring gear;
- a drive formation, for rotating the worm screw; and,
- a selecting mechanism, for engaging and disengaging the worm screw with the ring gear,
wherein the selecting mechanism comprises a first axis, whereon the worm screw is rotationally fixed, and wherein the first axis is configured for movement and stable positioning between a first position and a second position for engaging and disengaging the worm screw with the ring gear.

As used herein a "spool" refers to a device on which the strap can be wound. A "reel" or a "bobbin" may be used as synonyms. A spool comprises a barrel, preferably a cylindrical barrel, around which the strap can be wound. At least on one side of the barrel a flange may be attached. The flange may serve as a guiding member, preventing the strap to be wound partially next to the barrel, or to be wound around an axis supporting the retracting spool or barrel. Preferably, the flange and the cylindrical part of the barrel, form a 90° angle.

Preferably, the retracting spool comprises a cylindrical barrel with a certain dimeter d1, and wherein one base of the cylinder forms the first flange with a diameter d2, wherein d2> d1. Preferably, the strap which is wound around the barrel over its whole length of the strap, will form a cylinder with a diameter d3 around the barrel. Preferably, d2 > d3 > d1. This means that that the first flange still extends beyond the strap, when the strap is complete wound around the barrel or when the strap is completely retracted.

The flange has two sides, a first side facing the worm gear, and the second side opposing the first side.

In some embodiments, the ring gear is concentrically arranged around the barrel of the retracting spool. Preferably, the ring gear is concentrically attached on the first flange or integrated in the first flange, around the barrel of the retracting spool. This has the advantage that rotation of the ring gear, directly rotates the retracting spool, and that tension in the strap can be achieved by the rotation of the retracting spool.

In some embodiments, the retracting spool is spring loaded, preferably wherein the retracting spool comprises a spiral spring or a torsion spring, preferably a spiral spring. **In** preferred embodiments, only the retracting spool comprises a spiral spring. The invention allows for such a configuration, which makes assembling the strap tensioning assembly much easier. In some embodiments, one end of the spiral spring or a torsion spring is attached to the spool and the other end is attached to a housing or the rigid cover, this may result in a rotation of the spool compared to the housing or the rigid cover, caused by the tension stored in the spring. Preferably, the spiral spring or a torsion spring is housed within the barrel of the retracting spool.

In some embodiments, the first flange is attached to a first side of the barrel. In some embodiments, the spool is formed by a barrel between a first flange and a second flange. In some embodiments, the spool is formed by a by a barrel with a first flange on one side, and wherein the spool is paced with the other side of the barrel against a housing. This has the advantage that the strap aligns with the barrel when wound around the retracting spool.

In some embodiments, the gear teeth of the ring gear are arranged along the edge, preferably the outer edge, of the first flange.

As used herein, the first flange has two sides:
- an interior facing side, the side of the first flange facing the barrel; and,
- an exterior facing side, the side facing away from the barrel.

In some embodiments, the gear teeth of the ring gear are arranged on the interior facing side of the first flange. The advantage thereof is that the thickness of the retracting spool including the ring gear can be minimised compared to when the gear teeth would be arranged on the exterior facing side. In some embodiments, when the gear teeth of the ring gear are arranged on the interior facing side of the first flange, and outside the zone which may be occupied by the strap, when fully retracted. This has the advantage that the gear teeth can overlap with the thickness of the strap so that the overall hight or thickness can be minimized.

In some embodiments, the gear teeth of the ring gear are arranged in a spokes pattern on the surface of the first flange, preferably on the interior facing side of the first flange.

In some embodiments, a worm drive arrangement in formed, when the worm screw is engaged with the ring gear. In some embodiments, the ring gear and the worm screw are configured to form a worm drive arrangement when engaged. This means that rotation of the worm screw around its central axis, is translated in rotation of the ring gear, which is attached to or integrated in the first flange of the retracting spool, so that the retracting spool will rotate around its central axis. In some embodiments, the gear teeth of the ring gear are configured to mesh with the worm screw.

In some embodiments, the ring gear is a worm wheel.

In some embodiments, the ring gear is a bevel wheel. As used herein, the term "bevel wheel" refer to a cog-wheel of which the working-face is oblique or perpendicular to the axis. Preferably, a bevel gear is a cog-wheel wherein one face of the wheel is a tooth bearing face. In some embodiments, the gear teeth of the bevel gear may be shaped according to a pitch cone of 90° or less.

In some embodiments, the ring gear is a crown wheel. As used herein the term "crown wheel" refers to a cog-wheel which has gear teeth that project at right angles to the face of the wheel. In particular, a crown wheel is a type of bevel wheel where the pitch cone angle is 90°.

As used herein the term "strap" refers to a strip of flexible material, such as cloth, suitable to fasten or secure, a load. Preferably, the strap has a rectangular cross-section and is wound around the barrel along its broadest side. Preferably the strap has a width of at least 10 mm, preferably at least 20 mm, preferably at least 30 mm, preferably at least 40 mm, preferably at least 50 mm, preferably at least 60 mm. The strap may for example be made from nylon or Kevlar.

In some embodiments, a first end of the strap is attached to the barrel. Preferably, the barrel of the retracting spool comprises a slot, wherethrough the first end of the strap can be inserted and preferably be secured in the lumen of the barrel.

In some embodiments the barrel and/or the retracting spool may be made from a polymer or form a metal, such as steel.

In some embodiments, a second end of the strap is attached to a fastener, such as a hook or a bracket. The fastener can be used to secure the second end of the strap to a pallet or to a load on the pallet.

In some embodiments, the drive formation comprises a handle, a knob or crank, preferably a manually operatable handle, knob or crank. Preferably, the handle or the knob is configured to transfer rotation of the handle, the knob or crank to rotation of the worm screw. In some embodiments, a gear train is placed between worm screw and the handle, the knob or crank.

In some embodiments, the selecting mechanism comprise a first axis, whereon the worm screw is rotationally fixed, and wherein the first axis is moveable arranged in the assembly, between at least a first position and a second position.

In some embodiments, in the first position, the worm screw can engage with the gear teeth of the ring gear, and in the second position, the worm screw cannot engage with the gear teeth of the ring gear.

In some embodiments, the selecting mechanism comprise locking mechanism, for locking the worm screw in the first position. In some embodiments, the locking mechanism comprise a rotatable cam and a slot for engaging the cam. Preferably, rotation of the cam results in snapping of the cam in the slot. Preferably, the sides of the slot are aligned with one or more protrusions, to reversibly secure the cam in the slot. Preferably, rotation of the cam allows for the cam to snap over the one or more protrusion.

In some embodiments, engagement of the cam with the slot, results in a movement of the worm screw to the first position or the engaged position.

In some embodiments, disengagement of the cam with the slot, results in a movement of the worm screw to the second position or the disengaged position.

In some embodiments, the cam is rotatable mounted around the first axis of the worm screw. This way, the cam can be used to move the position of the first axis, from the first position to the second position and *vice versa.*

In some embodiments, the cam is rotatable fixed to a sleeve around the first axis of the worm screw, preferably wherein the sleeve can rotate around the first axis.

Preferably, the sleeve is rotatable fixed to a knob, handle or a lever. Manipulation of the knob, handle or lever may rotate the sleeve, and the cam which is rotatable fixed on the sleeve, thereby moving the axis first axis or the worm screw form the first position or the engaged position to the second position or the disengaged position and *vice versa.* In some embodiments, a lever is rotationally fixed to the sleeve, for rotating the sleeve and cam, preferably around the first axis.

In some embodiments, the selecting mechanism comprises a spring, wherein the spring favours the worm screw in the disengaged position or the first axis in the second position. Preferably, the latching mechanism can over come the force exerted by the spring, so that the latching mechanism can lock the worm screw in the engaged position or the first axis in the first position.

In some embodiments, the drive formation comprises a torque limiter. The torque limiter may limit the amount of torque that can be transferred from the handle, the knob or crank to the worm screw, which may prevent damage of the strap tensioning assembly by the operator.

In some embodiments, the drive formation comprises a direction limiter. The direction limiter may prevent the operator to turn the retracting spool in the unwind direction, which may prevent unwinding of the strap and entanglement of the trap inside the strap tensioning assembly.

In some embodiments, a strap guiding element pivots the strap from an axial position to a transvers position, in relationship to the barrel of the spool. The guiding element may prevent the strap to wind around the retracting spool in a wrong orientation. The guiding element may also prevent the fastener on the strap to enter the strap tensioning assembly.

In some embodiments, the first flange extends beyond the zone occupied by the strap, when the strap is completely retracted by the spool.

In some embodiments, the ring gear is arranged on the first flange, in the zone extending pass the zone occupied by the strap, when the strap is completely retracted by the spool.

In some embodiments, the height of the barrel is equal to or larger than the width of the strap.

In some embodiments, the drive formation is suitable for manually or electronically rotating the worm screw.

In some embodiments, the drive formation comprises a gear transmission, preferably a gear reduction between the handle, the knob or crank and the worm screw.

In some embodiments, the handle, the knob or the crank is retractable and/or extendable. This allows for a better manipulation of the handle, the knob or the crank, and may provide protection of the handle, the knob or the crank, when not in use. Preferably, the handle, the knob or crank is placed in a recess when not in use, and can be extended so that the handle, the knob or the crank extends from the recess for manipulation.

In some embodiments the handle, the knob or the crank is rotationally fixed to a second axis, whereas the worm screw is rotationally fixed to a second axis; and wherein a gear transmission is configured to translate rotation of the second axis to the first axis.

In some embodiments, the retracting spool and/or the first flange may be made from polypropylene, polyethylene, polystyrene, Acrylonitrile Butadiene Styrene (ABS), polycarbonate (PC), polymethyl methacrylate (PMMA), polyoxymethylene (POM) or polyamide, preferably polypropylene.

In some embodiments, the worm screw may be made from polyethylene, polystyrene, Acrylonitrile Butadiene Styrene (ABS), polycarbonate (PC), polymethyl methacrylate (PMMA), polyoxymethylene (POM) or polyamide, preferably polypropylene.

The invention further provides in a rigid cover comprising one or more the strap tensioning assembly according to an embodiment described herein.

In some embodiments, the rigid cover is suitable for use on palletised loads. The strap tensioning assemblies may be used to secure the rigid cover to the load or to the pallet.

In some embodiments, the rigid cover comprises at least two, preferably at least four, strap tensioning assemblies according to an embodiment described herein.

In some embodiments, the strap tensioning assemblies are at least partially encased in the rigid cover. In some embodiments, the strap tensioning assemblies at least partially placed inside cavity in the rigid cover.

In some embodiments, the strap tensioning assemblies are positioned in the rigid cover, in a way that the strap extends from the sides of the rigid cover.

The invention further provides in a pallet, comprising one or more the strap tensioning assembly according to an embodiment described herein.

In some embodiments, the pallet comprises at least two, preferably at least four, strap tensioning assemblies according to an embodiment described herein.

In some embodiments, the invention provides in a box, comprising a rigid cover according to an embodiment described herein.

The invention provides further in an article, preferably a packaging article comprising a strap tensioning assembly according to an embodiment described herein. Preferably, the article is a rigid cover, a pallet or a box as described herein.

In some embodiments, the article comprises at least two, preferably at least four, strap tensioning assemblies according to an embodiment described herein.

In an embodiment, the invention provides a strap tensioning assembly, comprising:
- a strap;
- a retracting spool, formed by a barrel and at least a first flange, preferably wherein the retracting spool is configured for by default retracting the strap, thereby winding the strap around the barrel of the retracting spool;
- a ring gear, comprising gear teeth, preferably arranged in a circle; wherein the ring gear is attached to or integrated in the first flange;
- a worm screw, engageable and disengageable with the ring gear;
- a drive formation, for rotating the worm screw; and,
- a selecting mechanism, for engaging and disengaging the worm screw with the ring gear;
wherein the drive formation, comprises:
- a housing;
- a shaft, comprising a proximal end placed outside the housing, and a distal end placed inside the housing;
   wherein the shaft is axially movable between a retracted position and an extended position;
- a grip, revolutely attached to the proximal end of the shaft;
- a torque transmission, rotationally fixed to the shaft, wherein the torque transmission is configured to transfer torque to the first axis, preferably to a gear rotationally fixed to the first;
- a first axis, on which the worm screw is rotationally fixed, and on which a torque receiver is rotationally fixed, configures for receiving torque from the torque transmission;
- a first spring element, configured for favouring the shaft in the retracted position;
- a locking element, configured for locking the shaft in the extended position;
- a torque limiter, wherein the torque limiter comprises a slip coupling between a first coupling half and a second coupling half;
   wherein the first coupling half is rotationally fixed to the grip;
   wherein the second coupling half is rotationally fixed to the shaft;
   wherein slip of the torque limiter causes translation of the second coupling half relative to the first coupling half in a direction along the axis of the shaft; and,
   wherein the second coupling half is configured to, upon axial movement, unlock the locking element, thereby causing the first spring element to move the shaft towards the retracted position.

The advantage of such a strap tensioning system is that the drive formation can be pulled out the housing for easier access by an operator. The torque limiter can be selected so that at a certain point during the manipulating the drive formation, slip occurs in the torque limiter when a certain value of tension is reached in the strap. Slip in the torque limiter will cause translation movement of the second coupling halve, which will ultimately result in the unlocking of the lock element, which result that the shaft will move to the retracted position. In this position the drive formation may be more protected from damage. Sucha a drive formation avoids over-tensioning of the strap or avoids damaging components inside the strap tensioning assembly. Such strap tensioning assemblies allow for an operator to repetitively apply the same amount of tension is the strap.

The term "rotationally fixed" as used herein refers to components that are rotationally fixed to each other, rotate together, preferably around the same axis. When one component rotates the other component must rotate as well, as they are rotationally fixed to each other.

Ther term "revolutely attached" as used herein refers to components that are revolutely attached to each other when the components are attached to each other, however, one of the components is able to revolve around the other one. Hence, rotation of one the components does not automatically lead to rotation of the other component.

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention due to over-tightening.

### EXAMPLES

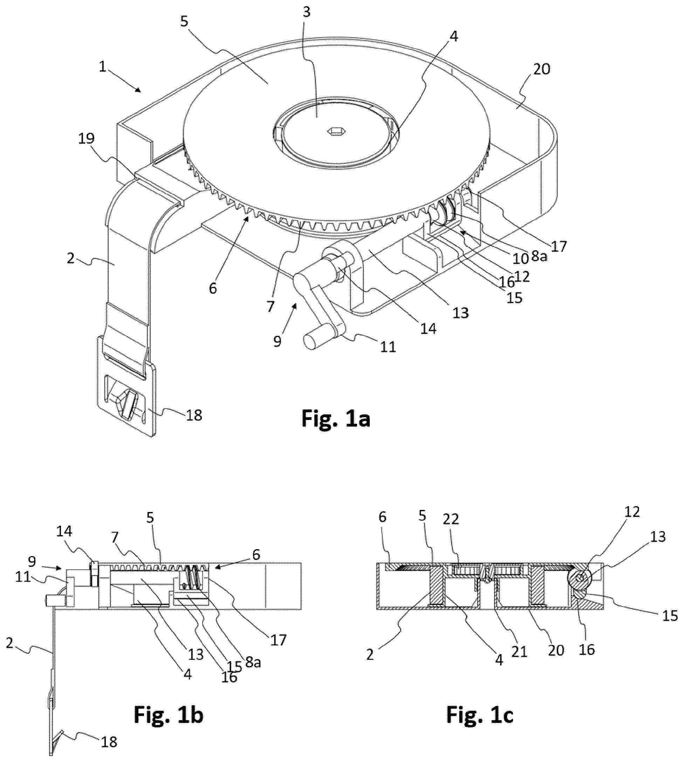

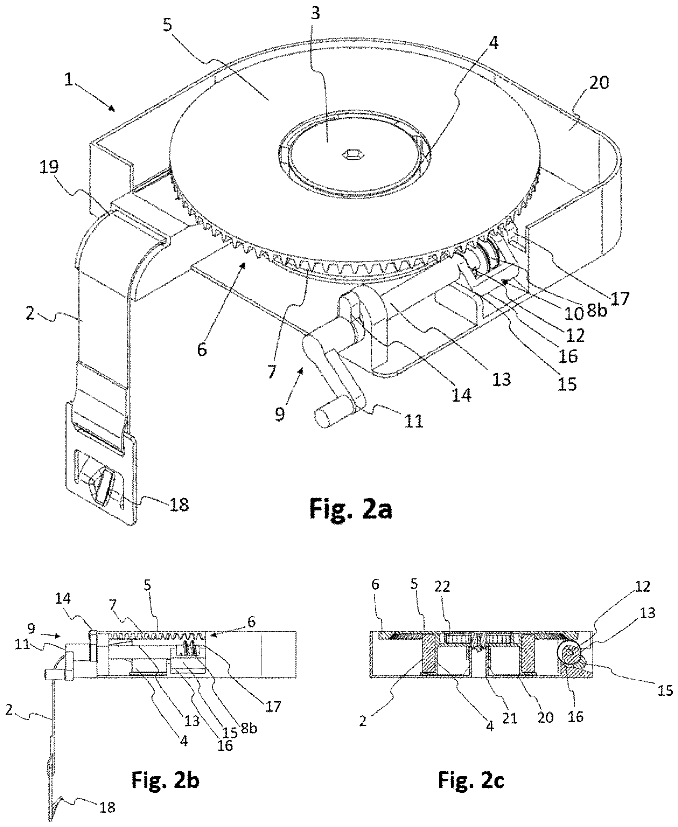

**Figure 1** and **Figure 2** depict a strap tensioning assembly (1) according to an embodiment of the invention. Figures 1a and 2a are perspective views of the strap tensioning assembly (1). Figures 1b and 2b are side views of the strap tensioning assembly (1) and Figures 1c and 2c are cross sections of the strap tensioning assembly (1).

The strap tensioning assembly (1) comprises a strap (2) which is retracted by a spring-loaded retracting spool (3), formed by a barrel (4) and a first flange (5). When retracting the strap (2), the strap (2) is wound around the barrel (4) of the retracting spool (3). A ring gear (6), comprising gear teeth (7) arranged in a circle, is integrated in the first flange (5).

Further does the strap tensioning assembly (1) comprises a worm screw (8) configured to either engage (8a) with the ring gear (see Figures 1a, 1b and 1c) or disengage (8b) with the ring gear (see Figures 2a, 2b, 2c).

A drive formation (9) can provide rotation of the worm screw (8), which is rotationally fixed to a first axis (12). In this example, the drive formation comprises a handle (11), which is rotationally fixed to the proximal end of first axis (12), in a way that rotation of the handle (11) causes rotation of the first axis (12) and rotation of the worm screw (8).

The distal end (17) of the first axis (12) is mounted movable between a first position and a second position. Engagement and disengagement of the worm screw (8) with the ring gear (6) can be done by selecting mechanism (10). In this example the selecting mechanism (10) are formed by a sleeve (13) which is places around the first axis (12) and can rotate around the first axis (12). Rotation of the sleeve (13) can be carried out by the manipulation of a lever (14), which is rotationally fixed to the sleeve (13). A cam (15) is rotationally fixed to the sleeve and can engage or disengage with a slot (16). When the cam (15) engages with the slot, the first axis (12) is pushed in the first position, so that the worm screw (8a) engages with the ring gear (6), and the gear teeth (7) of the ring gear (6) can mesh with the worm screw (8). This way, rotation of the handle (11) will ultimately result in rotation of the ring gear (6) and the retracting spool (3) thereby winding the strap (2) more around the retracting spool, thereby building up tension in the strap (2), which is secured via a hook (18) on for example a load or a pallet. As long as the ring gear is left engaged with the ring gear, the tension built up in the strap can be maintained. Disengagement of the worm screw (8), which can be achieved by rotating the cam (15) out of the slot (16), via manipulation of the lever (14), will move the first axis (12) to the second position and release the tension in the strap (2). When the worm screw is disengaged and the strap (2) is unhooked form the load or the pallet, the spring (22) inside the retracting spool (3) will cause the retracting spool (3) to rotate around its axis (21), and wind the strap (2) around the barrel (4) of the retracting spool (3). The strap (2) will enter the housing (20) or the strap tensioning assembly (1) via guiding element (19).

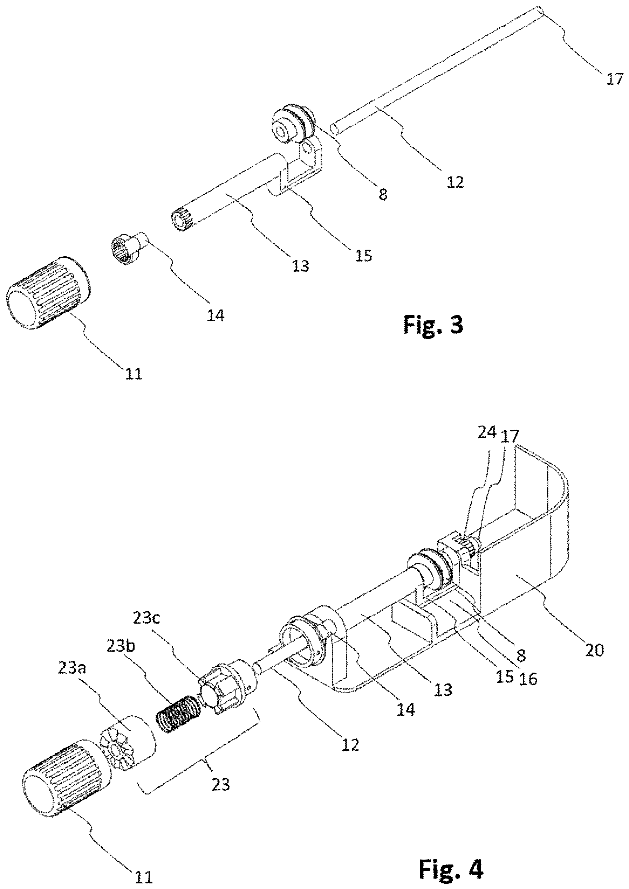

**Figure 3** shows an exploded view of the moving parts of a selecting mechanism that may be used in a strap tensioning assembly according to an embodiment of the invention. The figure shows the first axis (12); the worm screw (8); the sleeve (13), whereto the cam (15) is connected; a lever (14) for rotating the sleeve (13) around the first axis (12) form the disengaged position to the engaged position; and a knob, for rotating the first axis (12), which in its turns rotate the worm screw (8).

**Figure 4** shows a partially exploded view of a selecting mechanism that may be used in a strap tensioning assembly according to an embodiment of the invention. The figure shows a part of the housing (20) of the strap tensioning assembly. Attached to the housing is a slot (16) for accommodating cam (15), thereby pushing the distal end (17) of the first axis (12) to the first position, when the cam (15) is engaged with the slot (16) (as depicted in Figure 4), thereby bringing the worm screw (8) rotationally fixed on the first axis (12), in the engaged position configured for meshing with the ring gear (not shown in Fig. 4). The cam (15) can be rotated in and out of the slot (16) by the manipulation of lever (14), which is rotatable fixed to sleeve (13), whereto the cam (15) is attached. The sleeve (13) can rotate around first axis (12). The knob (11) is attached to the first axis (12) via a torque limiter (23). Rotation of the knob (11) is thereby transferred to rotation of the first axis (12) and the worm screw (8), which is rotationally fixed to the first axis (12), up to a certain pre-set value of torque is achieved, above this pre-set value the knob will slip compared to the first axis (12), and no rotation is transferred from the knob (11) to the first axis (12).

The torque limiter (23) in this embodiment, comprises a first coupling half (not visible) housed inside the knob (11) and a second coupling half (23a), which are pressed together by spring element (23b), which is placed between the second coupling half (23a) and attachment means (23c).

At the distal end on the first axis (12), a direction limiter (24) is included, such as a ratchet and pawl, preventing rotation of the first axis, in the direction the retraction spool (not shown in Fig. 4) would unwind the strap.

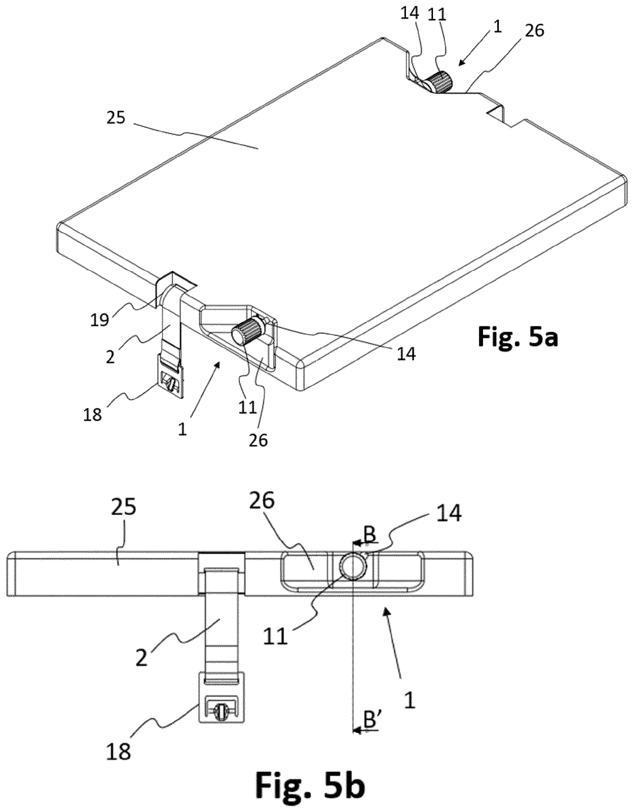

**Figure 5a** shows a perspective view of a rigid cover (25) comprising two strap tensioning assemblies (1) according to an embodiment of the invention. The strap tensioning assemblies (1) are mounted inside the rigid cover, apart from the strap (2), the hook (18), the guiding element (19), which ensures that the strap (2) is not twisted when retracted into the rigid cover (25). Furthermore, the knob (11) and the lever (14) are placed in a recess (26) in the side of the rigid cover (25), which may avoid damaging, but are still reachable for an operator, to tighten the strap by rotating the knob (11) or to engage or disengage the worm screw (8) by manipulating the lever (14).

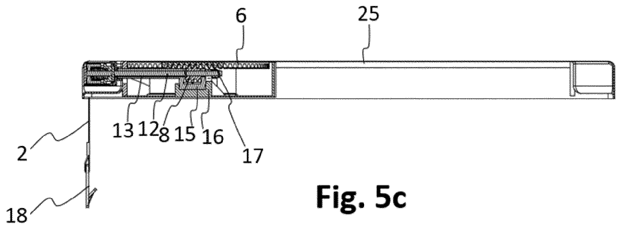

**Figure 5b** shows a side view of the rigid cover depicted in Figure 5a. **Figure 5c** shows a cross section along section BB' as indicated in Figure 5b. The cross-section is made along the first axis (12), the worm screw (8) and the sheet (13) whereto cam (15) is attached. As shown in Figure 5c, the cam (15) engages with slot (16), so that the distal end (17) of the first axis (12) is brought in the first position, so that the worm screw (8) engages with the ring gear (6).

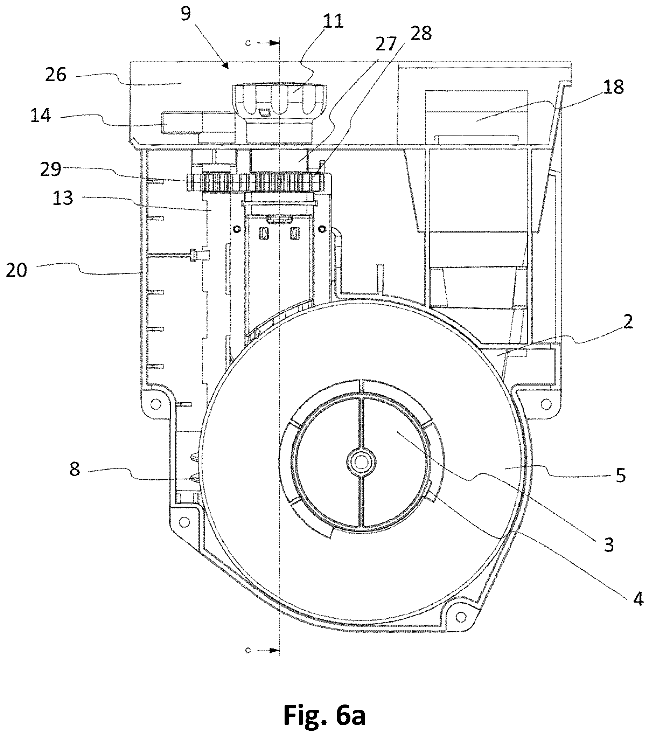

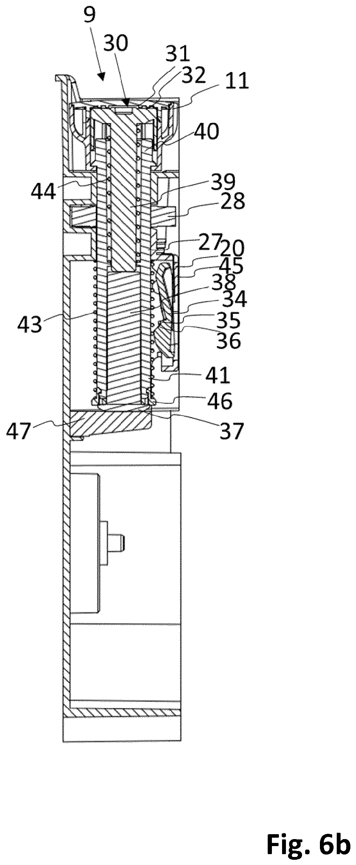

Figure **6a** and Figure **6b****,** depict a strap tensioning assembly (1) according to an embodiment of the invention. These figures are intended to show the drive formation (9), which comprises a shaft (27), in these figures placed in the retracted position, wherein the grip (11) is retracted in a recess (26). A gear serving as a torque transmission (28) is rotationally fixed to the shaft (27) and meshes with the gear, which serves a torque receiver (29) rotationally fixed on the first axis (not visible). The first axis is positioned inside hollow sleeve (13) and drives the worm screw (8) which is rotationally fixed to the first axis. Engaging the worm wheel and disengaging the worm screw (8) with the teeth of the ring gear (not visible) on the first flange (5) can be done by manipulating handle (14) as in the previous embodiments. Rotation of the flange (5) will provide tension in the strap (2), which is wound around the barrel (4) of the retracting spool (3). The strap (2) has a hook (18) on one end, for securing loads to a pallet.

Figure 6B is a cross-section of the embodiment shown in Figure 6a, through the drive formation (9) in the retracted position. A grip (11) is revolutely attached to the proximal end (40) of the shaft (27). The inside of the grip forms the first coupling half (31) of a torque limiter (30), which forms a slip coupling with the second coupling half (32) which extends (39) into the hollow shaft (27), and is pressed together by the second spring element (44). A torque transmission (28) is rotationally fixed to the outside of the shaft (27). In this retracted position the locking element (34), comprising a latch (35) and a guiding member (36), which does not engage with the distal end of the shaft (27), does not engage with the spring lock (46) or does not engage with the release member (37), which itself is positioned on the end surface of the sliding member (38) inside the hollow shaft (27). The spring lock (46) locks the first spring element (43), which favours the retracted position, in place at the distal end (41) of the shaft (27). The other side of the first spring element is anchored against the housing 22. Stop element (47) prevents further retraction of the shaft (27).

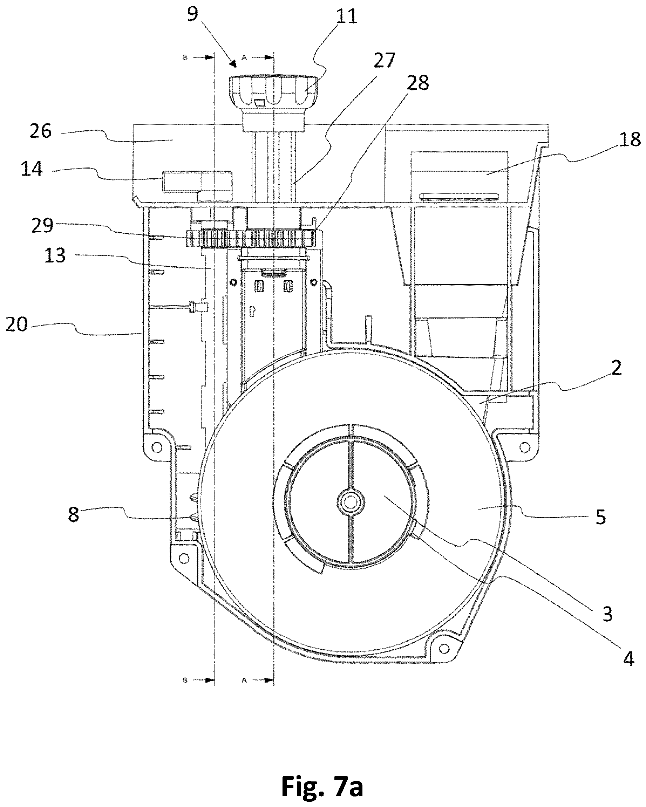

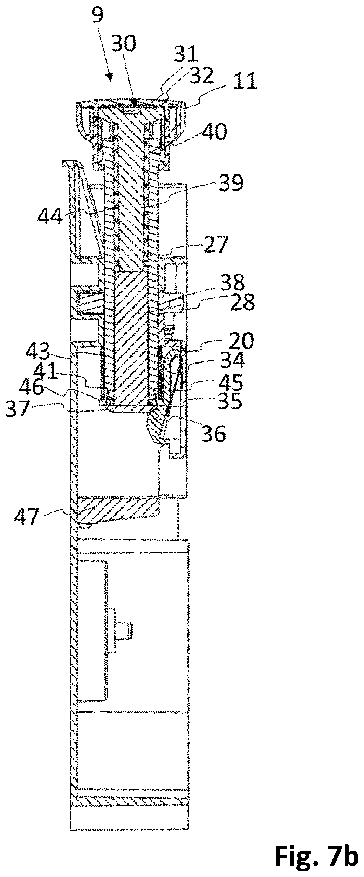

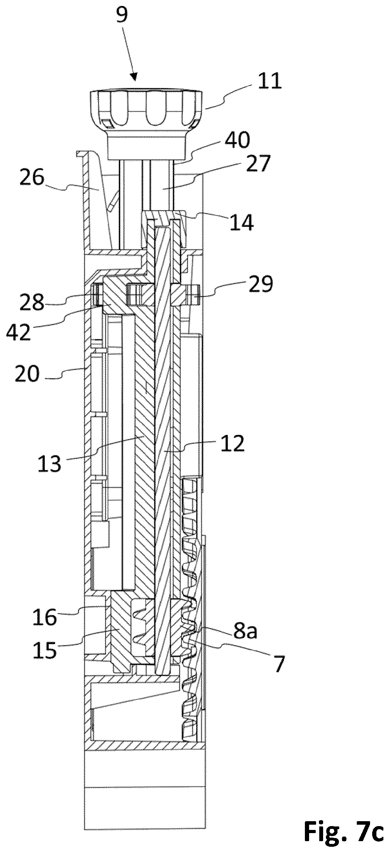

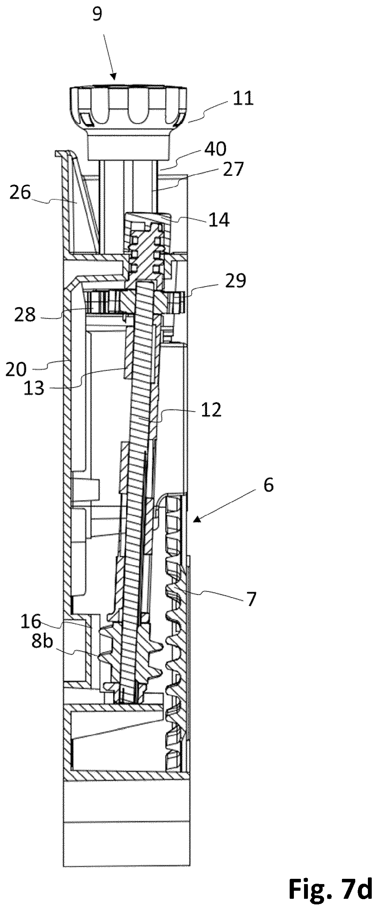

Figure **7a****,** Figure **7b****,** Figure **7c** and Figure **7d** depict the same embodiment as shown in Figure 6a and 6b, however with the drive formation in the extended position.

Compared to figure 6b, it can be seen in Figure 7b that in the extended position, the locking element (34), latches, under the influence of leaf spring (45), on to the corner of the hollow shaft (27) by a latch (35), this prevents the hollow shaft from returning to the retracted position. If an operator turns the grip (11), torque will be transferred via torque limiter (30), trough the hollow shaft (27) and trough the torque transmission (28) to the torque receiver (29) and so on to eventually winding of the retracting spool (3) thereby building up tension in the strap (2) until the tension in the strap succeeds a certain value, so that the torque limiter (30) will slip. Due to triangular protrusions on the interface between the first coupling half (31) and the second coupling half (32), the second coupling halve (32) will move in the axial direction of the shaft (27), as the grip (and so the first coupling half) is axially locked in relation to the shaft (27). The movement of the second coupling half (32) is transferred through the hollow shaft (27) by sliding member (39) and (38). The end of the sliding member (38), functions as a release member (37) which upon movement will engage with guiding member (36) and make locking element (34) to pivot, so that the hook (35) disengages with the hollow shaft (27) or the spring lock (46). This allows the first spring element (43) to move the hollow shaft (27) back to the retracted position.

Figure 7c shows a cross-section along the selecting mechanism, wherein the worm gear (8a) is in the engaged position with the teeth (7) of the ring gear. This position is selected by rotation of lever (14), which result in the rotation of sleeve (13) around the first axis (12), and thereby engaging cam (15) with slot (16) pushing the worm gear in the engaged position. In this example a second cam (42) is present, ensuring engagement of the torque transmission (28) and the torque receiver (29).

Figure 7d shows a cross-section along the selecting mechanism, wherein the worm gear (8b) is in the disengaged position with the teeth (7) of the ring gear. This position is selected by rotation of lever (14), which result in the rotation of sleeve (13) around the first axis (12), and thereby disengaging cam (15, not visible) from slot (16) allowing the worm gear to go to the disengaged position, optional; aided by a spring element such as a leaf spring. Upon disengagement from the worm screw, the retracting spool may wind up the strap under the influence of the spiral spring inside the retracting spool.

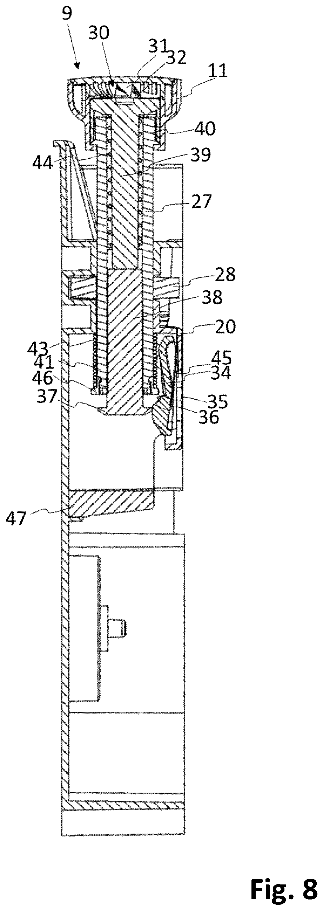

Figure **8** depict the same embodiment as shown in Figure 6a and 6b and in Figure 7a, 7b, 7c and 7d, however the drive formation is shown at the moment slip occurs in slip coupling between the first coupling half (31) and the second coupling half (32) in the torque limiter (30), which creates a movement in the axial direction of the shaft (27), due to the triangular teeth on the interface between the two coupling halves (31, 32). This movement is translated via the extended part (39) of the second coupling half and the sliding member (38), to the release member (37) which engages with the guiding member (36) of the locking element thereby releasing the shaft (27). As the sliding member (38) is not attached to the second coupling half, the sliding member can remain extended even after the slip occurred (which is only in short pulse), the extended sliding member (38) makes sure the disengagement of the locking element (34) remains after the pulse of the slip. The stop element (47) pushes the sliding member back into the shaft (27), upon retraction of the shaft (27).

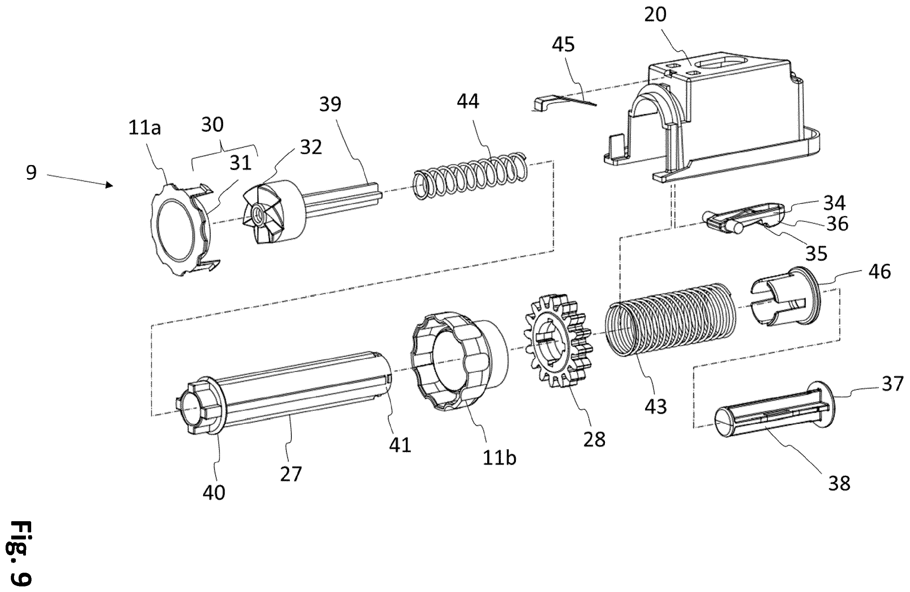

Figure **9** depicts an exploded view of the drive formation depicted in in Figure 6a and 6b, Figure 7a, 7b, 7c and 7d, and Figure 8. As shown in the figure, the handle is made from two halves (11a and 11b).

## Claims

1. A strap tensioning assembly (1), comprising:
a strap (2);
a retracting spool (3), formed by a barrel (4) and at least a first flange (5), wherein the retracting spool (3) is configured for by default retracting the strap (2), thereby winding the strap (2) around the barrel (4) of the retracting spool (3);
a ring gear (6), comprising gear teeth (7), wherein the ring gear (6) is attached to or integrated in the first flange (5);
a worm screw (8), engageable and disengageable with the ring gear (6);
a drive formation (9), for rotating the worm screw (8); and,
a selecting mechanism (10), for engaging and disengaging the worm screw (8) with the ring gear (6),
wherein the selecting mechanism (10) comprises a first axis (12), whereon the worm screw (8) is rotationally fixed, and wherein the first axis (12) is configured for movement and stable positioning between a first position and a second position for engaging and disengaging the worm screw (8) with the ring gear (6).

2. The strap tensioning assembly (1) according to claim 1, wherein the ring gear (6) is concentrically arranged around the barrel (4).

3. The strap tensioning assembly (1) according to any one of previous claims, wherein the retracting spool (3) is spring loaded, preferably wherein the retracting spool comprises a spiral spring (22) or a torsion spring.

4. The strap tensioning assembly (1) according to any one of previous claims, wherein the gear teeth (7) of the ring gear (6) are arranged on one side of the first flange (5).

5. The strap tensioning assembly (1) according to anyone of previous claims, wherein each gear tooth (7) of the ring gear (6) is formed from a body and disposed in a radial direction with respect to an axis of rotation of the retracting spool.

6. The strap tensioning assembly (1) according to any one of previous claims,
wherein the ring gear (6) is a worm wheel, a bevel gear or a crown gear.

7. The strap tensioning assembly (1) according to any one of previous claims, wherein the drive formation (9) comprises a handle, a knob (11) or a crank; preferably a manually operatable handle, knob or crank (11).

8. The strap tensioning assembly (1) according to any one of previous claims, wherein in the first position, the worm screw (8) engages with the gear teeth (7) of the ring gear (6), and wherein in the second position the worm screw (8) disengages with the gear teeth (7) of the ring gear (6).

9. The strap tensioning assembly (1) according to any one of previous claims, wherein the selecting mechanism (10) comprise locking mechanism, for locking the worm screw (8) in the first position.

10. The strap tensioning assembly according to any one of previous claims,
wherein the locking mechanism comprise a rotatable cam (15) and a slot (16) for engaging the cam (15).

11. The strap tensioning assembly according to any one of previous claims,
wherein the drive formation (9) comprises a gear transmission, preferably a gear reduction between the handle, knob or crank (11) and the worm screw (8).

12. A rigid cover (25) comprising one or more the strap tensioning assemblies (1) according to any one of claims 1 to 11.

13. A pallet comprising one or more the strap tensioning assemblies (1) according to any one of claims 1 to 11.

14. A box, comprising a rigid cover according to any one of claim 12.

## Patentansprüche

1. Gurtspannbaugruppe (1), umfassend:
- einen Gurt (2),
- eine Rückholspule (3), die aus einem Zylinder (4) und mindestens einem ersten Flansch (5) gebildet ist, wobei die Rückholspule (3) dazu ausgestaltet ist, den Gurt (2) standardmäßig rückzuholen, wodurch der Gurt (2) um den Zylinder (4) der Rückholspule (3) gewickelt wird,
- ein Hohlrad (6) mit Zähnen (7), wobei das Hohlrad (6) an dem ersten Flansch (5) angebracht oder in diesen integriert ist,
- eine Schnecke (8), die mit dem Hohlrad (6) in Eingriff bringbar und daraus ausrückbar ist,
- einen Antriebsaufbau (9) zum Drehen der Schnecke (8) und
- einen Wahlmechanismus (10), um die Schnecke (8) mit dem Hohlrad (6) in Eingriff zu bringen und daraus auszurücken,
wobei der Wahlmechanismus (10) eine erste Achse (12) umfasst, an der die Schnecke (8) drehfest angebracht ist, und wobei die erste Achse (12) für eine Bewegung und stabile Positionierung zwischen einer ersten Position und einer zweiten Position ausgestaltet ist, um die Schnecke (8) mit dem Hohlrad (6) in Eingriff zu bringen und daraus auszurücken.

2. Gurtspannbaugruppe (1) nach Anspruch 1, wobei das Hohlrad (6) konzentrisch um den Zylinder (4) angeordnet ist.

3. Gurtspannbaugruppe (1) nach einem der vorhergehenden Ansprüche, wobei die Rückholspule (3) gefedert ist, vorzugsweise wobei die Rückholspule eine Spiralfeder (22) oder eine Torsionsfeder umfasst.

4. Gurtspannbaugruppe (1) nach einem der vorhergehenden Ansprüche, wobei die Zähne (7) des Hohlrads (6) an einer Seite des ersten Flanschs (5) angeordnet sind.

5. Gurtspannbaugruppe (1) nach einem der vorhergehenden Ansprüche, wobei jeder Zahn (7) des Hohlrads (6) aus einem Körper gebildet und in einer radialen Richtung in Bezug auf eine Drehachse der Rückholspule angeordnet ist.

6. Gurtspannbaugruppe (1) nach einem der vorhergehenden Ansprüche, wobei das Hohlrad (6) ein Schneckenrad, ein Kegelrad oder ein Tellerrad ist.

7. Gurtspannbaugruppe (1) nach einem der vorhergehenden Ansprüche, wobei der Antriebsaufbau (9) einen Griff, einen Knopf (11) oder eine Kurbel, vorzugsweise einen Griff, einen Knopf oder eine Kurbel (11), die manuell bedienbar sind, umfasst.

8. Gurtspannbaugruppe (1) nach einem der vorhergehenden Ansprüche, wobei die Schnecke (8) in der ersten Position mit den Zähnen (7) des Hohlrads (6) in Eingriff kommt und wobei die Schnecke (8) in der zweiten Position aus den Zähnen (7) des Hohlrads (6) ausrückt.

9. Gurtspannbaugruppe (1) nach einem der vorhergehenden Ansprüche, wobei der Wahlmechanismus (10) einen Verriegelungsmechanismus zum Verriegeln der Schnecke (8) in der ersten Position umfasst.

10. Gurtspannbaugruppe nach einem der vorhergehenden Ansprüche, wobei der Verriegelungsmechanismus einen drehbaren Nocken (15) und einen Schlitz (16) zur Ineingriffnahme des Nockens (15) umfasst.

11. Gurtspannbaugruppe nach einem der vorhergehenden Ansprüche, wobei der Antriebsaufbau (9) ein Zahnradgetriebe, vorzugsweise eine Getriebeuntersetzung zwischen dem Griff, dem Knopf oder der Kurbel (11) und der Schnecke (8) umfasst.

12. Starre Abdeckung (25), umfassend eine oder mehrere der Gurtspannbaugruppen (1) nach einem der Ansprüche 1 bis 11.

13. Palette, umfassend eine oder mehrere der Gurtspannbaugruppen (1) nach einem der Ansprüche 1 bis 11.

14. Kiste, umfassend eine starre Abdeckung nach Anspruch 12.

## Revendications

1. Ensemble de tension de sangle (1), comprenant :
- une sangle (2) ;
- une bobine de rétraction (3), formée par un cylindre (4) et au moins une première bride (5), la bobine de rétraction (3) étant conçue pour rétracter par défaut la sangle (2), enroulant ainsi la sangle (2) autour du cylindre (4) de la bobine de rétraction (3) ;
- une couronne (6), comprenant des dents d'engrenage (7), la couronne (6) étant fixée ou intégrée à la première bride (5) ;
- une vis sans fin (8), pouvant venir en prise avec la couronne (6) et se séparer de celle-ci ;
- une formation d'entraînement (9), pour faire tourner la vis sans fin (8) ; et,
- un mécanisme de sélection (10), pour mettre en prise la vis sans fin (8) avec la couronne (6) et la séparer de celle-ci,
le mécanisme de sélection (10) comprenant un premier axe (12) sur lequel la vis sans fin (8) est fixée en rotation, et le premier axe (12) étant conçu pour se déplacer et se positionner de manière stable entre une première position et une seconde position pour mettre en prise la vis sans fin (8) avec la couronne (6) et la séparer de celle-ci.

2. Ensemble de tension de sangle (1) selon la revendication 1, la couronne (6) étant disposée concentriquement autour du cylindre (4).

3. Ensemble de tension de sangle (1) selon l'une quelconque des revendications précédentes, la bobine de rétraction (3) étant chargée par ressort, de préférence la bobine de rétraction comprenant un ressort spiral (22) ou un ressort de torsion.

4. Ensemble de tension de sangle (1) selon l'une quelconque des revendications précédentes, les dents d'engrenage (7) de la couronne (6) étant disposées sur un côté de la première bride (5).

5. Ensemble de tension de sangle (1) selon l'une quelconque des revendications précédentes, chaque dent d'engrenage (7) de la couronne (6) étant formée à partir d'un corps et disposée dans une direction radiale par rapport à un axe de rotation de la bobine de rétraction.

6. Ensemble de tension de sangle (1) selon l'une quelconque des revendications précédentes, la couronne (6) étant une roue à vis sans fin, une roue conique ou une roue de champ.

7. Ensemble de tension de sangle (1) selon l'une quelconque des revendications précédentes, la formation d'entraînement (9) comprenant une poignée, un bouton (11) ou une manivelle ; de préférence une poignée, un bouton ou une manivelle (11) pouvant être actionné manuellement.

8. Ensemble de tension de sangle (1) selon l'une quelconque des revendications précédentes, dans la première position, la vis sans fin (8) venant en prise avec les dents d'engrenage (7) de la couronne (6), et, dans la seconde position, la vis sans fin (8) se séparant des dents d'engrenage (7) de la couronne (6).

9. Ensemble de tension de sangle (1) selon l'une quelconque des revendications précédentes, le mécanisme de sélection (10) comprenant un mécanisme de verrouillage, pour verrouiller la vis sans fin (8) dans la première position.

10. Ensemble de tension de sangle selon l'une quelconque des revendications précédentes, le mécanisme de verrouillage comprenant une came rotative (15) et une fente (16) pour mettre en prise la came (15).

11. Ensemble de tension de sangle selon l'une quelconque des revendications précédentes, la formation d'entraînement (9) comprenant une transmission par engrenage, de préférence une réduction par engrenage entre la poignée, le bouton ou la manivelle (11) et la vis sans fin (8).

12. Couvercle rigide (25) comprenant un ou plusieurs ensembles de tension de sangle (1) selon l'une quelconque des revendications 1 à 11.

13. Palette comprenant un ou plusieurs ensembles de tension de sangle (1) selon l'une quelconque des revendications 1 à 11.

14. Boîte, comprenant un couvercle rigide selon l'une quelconque de la revendication 12.
